# EUROPEAN PATENT SPECIFICATION

(11) **EP 0 258 636 B1**
(45) Date of publication and mention of the grant of the patent: **24.11.1993**
(21) Application number: 87111000.3
(22) Date of filing: 29.07.1987
(51) Int. Cl.: C08L 67/02

(54) **Quickly crystallizing polyester compositions**
Schnell kristallisierende Polyesterzusammensetzungen
Compositions de polyester cristallisant rapidement

(30) Priority: 01.08.1986 IT 2135686
(43) Date of publication of application: 09.03.1988
(73) Proprietor: Montefibre S.p.A., Milan (IT)
(72) Inventor: Bastioli, Catia, I-28100 Novara (IT); Bellotti, Vittorio, I-28010 Fontaneto D'Agogna Novara (IT); Del Giudice, Luciano, I-20146 Milano (IT)
(74) Representative: Weinhold, Peter, Dr.

(56) References cited:
- EP-A- 0 021 648
- EP-A- 0 025 573
- EP-A- 0 031 201
- EP-A- 0 102 768
- EP-A- 0 121 051
- GB-A- 2 015 014
- US-A- 3 962 368
- CHEMICAL ABSTRACTS, vol. 101, no. 8, 20th August 1984, page 16, abstract no. 55750d, Columbus, Ohio, US; R. LEGRAS et al.: "Chemical nucleation, a new concept applied to the mechanism of action of organic acid salts on the crystallization of polyethylene terephthalate and bisphenol-A polycarbonate", & POLYMER 1984, 25(6), 835-44
- CHEMICAL ABSTRACTS, vol. 101, no. 6, 6th August 1984, page 17, abstract no. 39080e, Columbus, Ohio, US; R. LEGRAS et al.: "Chemical nucleation, a new concept in polymer crystallization", & POLYM. MATER. SCI. ENG. 1984, 50, 495-501

## Description

The present invention relates to quick-crystallization polyester compositions.

More specifically, the invention relates to quickly crystallizing polyester compositions in which the polyester mainly consists of polyethylene terephthalate (PET).

PET is used in large amounts, particularly in the fields of films and fibres, while its commercial development as a material for injection molding has been slackened due to the long cycle times necessary to obtain dimensionally stable articles.

Actually, compared to other plastic materials, the compositions utilized for said injection molding do not reach high crystallinity degrees within equal periods of time.

Therefore, a premature with-drawing of a not sufficiently crystallized part may in the course of time result in a further crystallization and consequently in changes in the volume of the article.

However, the crystallization rate of PET can be increased, that means that the crystallization temperature of the melt can be raised by incorporating proper nucleating agents into the molding composition.

Nucleating agents for the PET crystallization are known in the art.

For example, EP-A-31 201 describes the preparation of PET by reacting terephthalic acid and ethylene glycol in the presence of sodium hydroxide, with "in situ" formation of the nucleating agent.

EP-A-21 648 describes the reaction of PET with a nucleating agent selected from the ionizable metal salts of an organic compound having at least one acidic proton.

Examples of such salts are the sodium salts of substituted benzoic acids which contain at least one substituent of the nitro, halogen, hydroxyl, phenyl or oxyphenyl type.

EP-A-25 573 describes the nucleation of PET with a polyoxyalkylene containing at least one -COOM group.

EP-A-121 051 describes PET nucleating agents which are copolymers derived from a polyalkylene terephthalate and a sulfonate salt derived from certain sulfo-substituted aromatic dicarboxylic acids.

US-A-3,761,450 describes lithium and/or sodium salts of aliphatic, cycloaliphatic and aromatic carboxylic acids or heterocyclic polycarboxylic acids, containing up to 20 carbon atoms, as nucleating agents for PET.

GB-A-2,015,014 describes sodium and potassium salts of selected organic polymers, containing pendent carboxylic groups, as agents capable of increasing the crystallization rate of PET in the composite materials.

US-A-3,516,957 describes, as nucleating agents for PET, salts of alkali and alkaline-earth metals of organic acids having from 10 to 25 carbon atoms, such as for example sodium stearate.

Furthermore, JP-A-71/29977 describes sodium benzoate as a nucleating agent for PET.

US-A-4,212,791 describes compositions comprising PET, an inert inorganic nucleating agent, a crystallization promotor (polyester oligomer which does not contain carboxylates) and a copolyester-ether thermoplastic segmented elastomer.

EP-A-102,768 describes a method of nucleating PET by using a nucleating agent comprising an alkali metal salt of a polyethyleneterephthalate oligomer. The nucleating agent is first formed and then brought into contact with the PET to be nucleated.

From an examination of the prior art it is apparent, however, that the nucleating agents which cause an appreciable increase in the crystallization rates lead to undesirable molecular weight reductions, while the nucleating agents which do not lead to detrimental effects only slightly affect the behaviour of PET during crystallization.

It has now been found, and this is the object of the present invention, that the above drawbacks can be overcome by quickly crystallizing polyester compositions comprising a mixture consisting of a thermoplastic polyester resin and of a nucleating agent selected from (a) polymer-based alkali or alkaline-earth metal salts, or mixtures of said salts, of the general formula: 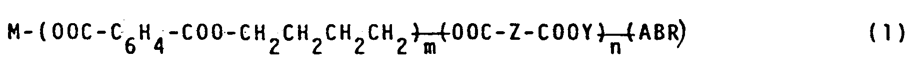
wherein
- M: is an alkali or alkaline-earth metal;
- Y: is a group selected from -CH₂CH₂-, -(CH₂)₄- and -CH₂CH₂OCH₂CH₂-;
- Z: represents a group -C₆H₄-, or a group -(CH₂)_{q}- , q being an integer from 7 to 10;
- A: is selected from carboxylate, sulphonate, sulphinate, phosphonate and phosphinate;
- B: is a direct bond or a group selected from -CH=CH-, -CH₂- and -CH₂CH₂-;
- R: is either an aryl radical containing from 1 to 3 aromatic rings, either directly linked to each other or condensed or linked through one of the following difunctional groups:
-O-, -CO-, -OCH₂CH₂O-, -SO₂-, -NH-, -C(CH₃)₂-; or R is a heterocyclic ring such as thiophene or furan; with the proviso that when A is a carboxylate and B is a direct bond, R is substituted by at least one group selected from nitro, halogen, phenyl or oxyphenyl and, for R = phenyl, R may also be substituted by a group selected from -COOM and -COO(CH₂)₄OH;
- m: is an integer from 5 to 20, preferably from 5 to 10;
- n: is O or an integer from 1 to 5, preferably from 1 to 3; and
(b) reaction products of polybutylene terephthalate with sodium salicylate.

Any thermoplastic polyester resin is utilizable for preparing the composition of the present invention, although polyethylene terephthalate is the preferred resin.

Analogously, any alkali or alkaline-earth metal, e.g. lithium, sodium, potassium, calcium and magnesium, can be used for preparing the nucleating agents (a) and (b), although sodium is the preferred alkali metal.

The polymer-based nucleating agent utilized for preparing the composition according to the present invention has a content of alkali metal or of alkaline-earth metal of from 0.09 to 33% by weight, depending on the nature of M, on the number of -COOM with respect to the other end groups and on the value of m and of n.

The alkali metal content can practically be varied as a function of the crystallization temperature to be reached and of the molecular weight to be maintained.

When the metal is sodium, the sodium content in the nucleating agent is preferably higher than about 0.4% by weight.

The molecular weight and the chemicophysical properties, as well as the viscosity of the nucleating agent utilized in the preparation of the composition forming the object of the present invention, are controlled to a great extent by the amount of alkali metal or alkaline-earth metal and vary in inverse proportion to its concentration.

Generally, however, the nucleating agent has an inherent viscosity (η), in phenol/tetrachloroethane (60/40) at 30°C, of more than 0.1 dl/g and an average number molecular weight higher than 1,000.

The nucleating agent of general formula (1) is usually prepared separately and is admixed with the thermoplastic polyester resin in the molten state in amounts ranging from 0.1 to 10% by weight, preferably from 0.2 to 4% by weight, in order to have an amount of alkali metal or of alkaline-earth metal in the final composition of the nucleated polyester of more than about 300 ppm.

The quickly crystallizing polyester compositions of the present invention are characterized by high crystallization temperatures, high crystallization rates, a small reduction of the molecular weight, a homogeneous distribution and a low concentration of the nucleating agent. Moreover, inert fillers, such as fibres of glass, carbon, boron etc., and/or inorganic particles of glass, mica, zeolites, graphite, talc, etc. can be added thereto.

The nucleating agent may be prepared by intimately mixing the polymeric base material in the form of a fine powder with a salt of the general formula

M⁺(ABR)⁻ (2)

in an amount from 5 to 20% by weight, based on the total, and by extruding the resulting mixture at temperatures higher than 250°C.

The product, after having been washed in boiling water to remove unreacted salt is ready for use.

Examples of salts which are useful for preparing the nucleating agent of general formula (1) are: sodium ortho-chlorobenzoate, sodium salicylate, sodium ortho-nitrobenzoate, sodium phenyl acetate, sodium ortho-, meta-, para-chlorophenyl acetate, sodium ortho-, meta-, para-hydroxyphenyl acetate, sodium 2-chloro-naphthoate, sodium nicotinate, etc.

Preferred salts are sodium ortho-chorobenzoate and sodium salicylate.

According to another method of preparation, the nucleating agent can be obtained by dissolving the polymeric base material in a proper solvent, for example m-cresol, in order to prepare solutions having concentrations not higher than 10%.

To these solutions there is then added an aqueous solution (30% by weight) of a hydroxide of an alkali or alkaline-earth metal, preferably sodium hydroxide, in an amount sufficient to obtain a basic pH (phenolphthalein).

The reaction product is precipitated, for example with methanol, washed and dried and is then ready for application.

The polymeric base material for the nucleating agent may be prepared according to conventional poly-condensation processes, e.g. by reaction of terephthalic acid, or esters thereof, optionally in admixture with acids of formula HCOO-(CH₂)_{q}-COOH, wherein q is the same as defined hereinbefore, with butylene glycol, either alone or in admixture with diols such as HOCH₂CH₂OH and HOCH₂CH₂OCH₂-CH₂OH.

In order to give a better understanding of the present invention, in the following a few illustrative examples are given which are not to be construed, however, as a limitation of the invention.

A few methods of preparing the nucleating agent which is utilized for the preparation of the compositions of the invention are described as well.

The effectiveness of the nucleating agent was evaluated on the basis of the crystallization peak temperature of polyester resin/nucleating agent mixtures during the cooling of the melt by means of differential thermal analysis.

The inherent viscosity, η, was equal to 0.25 dl/g in 60:40 phenol:tetrachloroethane at 30°C. The average number molecular weight Mn and the average weight molecular weight Mw were calculated from GPC (gel permeation chromatography), using m-cresol as solvent, at 100°C. The sodium content was determined by atomic absorption.

### PREPARATION A

90 g of granules of polybutylene terephthalate (PBT) (η = 0.8 dl/g in 60:40 phenol:tetrachloroethane at 30°C) and 10 g of sodium ortho-chlorobenzoate (fine powder) were blended in a mixer.

The blend was then extruded in a 1.9 cm (3/4 inch) extruder, type HAAK RHEOCORD EC, at 280°C.

The obtained sample had an inherent viscosity η = 0.26 dl/g. This product was washed in boiling water for 48 hours in order to remove unreacted sodium salt.

The final sodium content was determined by atomic absorption: it amounted to about 0.75%. The crystallization peak temperature was obtained from the cooling curve of the melt by a differential scanning calorimeter Perkin Elmer DSC 7, employing a cooling rate of 10°C/minute. The crystallization peak temperature was equal to 198°C, compared to a corresponding temperature of 175°C for the starting PBT.

### PREPARATION B

A sample of amorphous PBT (η = 0.8 dl/g) was dissolved in m-cresol to obtain a 3%-solution. The sample was neutralized by adding an aqueous solution of sodium hydroxide (30%) at 30°C up to basic pH (phenolphthalein).

The product was precipitated with methanol, filtered, washed with methanol and dried.

It exhibited an inerent viscosity η = 0.17 dl/g and a sodium concentration equal to 0.55%.

The crystallization peak temperature was about 200°C.

### PREPARATION C

The procedure of preparation A was followed, with the exception that sodium ortho-chlorobenzoate was replaced by sodium salicylate. The inherent viscosity of the thus prepared nucleating agent was 0.45 dl/g and the sodium content, measured by atomic absorption, was 0.72%; the crystallization peak temperature was 195°C.

### EXAMPLE 1

The nucleating agent obtained from preparation A was ground until a fine powder was obtained and was then blended in different percentages with PET (η = 0.78 dl/g). The various blends obtained were dried at 120°C for 12 hours, then they were extruded at 280°C.

The obtained results are reported hereinafter:

| %Nucl. | %Na | Tc(°C) | DHc(J/g) | η(dl/g) | Mn | Mw |
|---|---|---|---|---|---|---|
| 0 | 0 | 185 | -40 | 0.77 | 16000 | 47000 |
| 1 | 0.006 | 200.4 | -40 | 0.77 | 15600 | 48850 |
| 2 | 0.012 | 202.2 | -41 | 0.76 | 14200 | 44900 |
| 4 | 0.024 | 208.7 | -41 | 0.73 | 13750 | 42200 |
| 6 | 0.036 | 210.3 | -43 | 0.68 | 14000 | 40600 |

From these data it is apparent that it is possible to nucleate PET without causing appreciable changes in the molecular weight.

### EXAMPLE 2

Using the nucleated PETs of example 1, some 3 mm-thick plates were prepared by compression molding. Said plates were obtained by causing the various polymers to melt at 280°C for 3 minutes without pressure and for 2 minutes under a pressure of 6 MPa (60 atm).

The resulting plates were cooled at a rate of 50°C/minute, molten again at 280°C for 5 minutes and then transferred into a press, where they remained for 30 seconds and for 60 seconds at 160°C.

The crystallinity values, determined by IR and viscosity measurements, are indicated hereinafter.

| %Nucl. | Residence time in mold (sec.) | Cryst.(%) | η (dl/g) |
|---|---|---|---|
| 0 | 30 | 2 | 0.65 |
| | 60 | 20 | 0.65 |
| 1 | 30 | 23 | 0.67 |
| | 60 | 30 | 0.67 |
| 2 | 30 | 26.6 | 0.67 |
| | 60 | 30.5 | 0.67 |
| 4 | 30 | 30 | 0.65 |
| | 60 | 30 | 0.65 |
| 6 | 30 | 30 | 0.65 |
| | 60 | 30 | 0.65 |

### EXAMPLE 3

Tests of the same type as indicated in example 1 were carried out using the nucleating agent of preparation C. The obtained results are reported hereinbelow:

| %Nucl. | %Na | Tc (°C) | η (dl/g) |
|---|---|---|---|
| 0 | 0 | 185 | 0.73 |
| 2 | 0.014 | 200 | 0.73 |
| 4 | 0.028 | 202 | 0.71 |

### EXAMPLE 4

Example 1 was repeated, using the nucleating agent of preparation B. The obtained results are reported hereinafter:

| %Nucl. | %Na | Tc (°C) | η (dl/g) |
|---|---|---|---|
| 0 | 0 | 185 | 0.73 |
| 3 | 0.017 | 204 | 0.71 |
| 5 | 0.028 | 206 | 0.70 |

### EXAMPLE 5

Using a PET nucleated with 4% of the nucleating agent of preparation A, composite plates containing 30% of long glass fibres were produced according to the process described in IT-A-19610 A/86.

Said plates exhibited an inherent viscosity of 0.73 dl/g.

After having melted the plates in an IR furnace at 290°C and having transferred the melt into a mold at 160°C, finished parts were moulded from said plates by means of flow moulding. The applied pressure was 15 MPa (150 kg/cm²).

After a residence time in the mold of about 30 seconds, the crystallinity percentage of PET was about 30%.

## Claims

1. Quickly crystallizing polyester composition, comprising a mixture consisting of a thermoplastic polyester resin and of a nucleating agent selected from (a) polymer-based alkali or alkaline-earth metal salts, or mixtures of said salts, of the general formula: 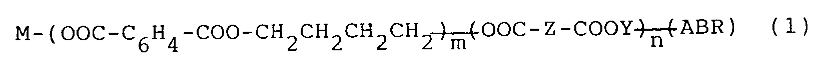 wherein
M is an alkali metal or an alkaline-earth metal;
Y is a group selected from -CH₂CH₂-, -(CH₂)₄- and -CH₂CH₂OCH₂CH₂-;
Z is -C₆H₄- or -(CH₂)_{q}-, q being an integer from 7 to 10;
A is selected from carboxylate, sulphonate, sulphinate, phosphonate and phosphinate;
B is a direct bond or a group selected from -CH=CH-, -CH₂- and -CH₂CH₂-;
R is an aryl radical containing from 1 to 3 aromatic rings, either directly linked to each other or condensed or linked through one of the following difunctional groups:
-O-, -CO-, -OCH₂CH₂O-, -SO₂-, -NH-, -C(CH₃)₂-; or R is a heterocyclic ring; with the proviso that when A is carboxylate and B is a direct bond, R is substituted by at least one group selected from nitro, halogen, phenyl and oxyphenyl and, for R = phenyl, R may also be substituted by one group selected from -COOM and -COO(CH₂)₄OH;
m is an integer from 5 to 20; and
n is O or an integer from 1 to 5, preferably from 1 to 3; and
(b) reaction products of polybutylene terephthalate with sodium salicylate.

2. Composition according to claim 1, wherein the polyester thermoplastic resin is polyethylene terephthalate.

3. Composition according to claim 1 or 2, wherein the nucleating agent is present in amounts of from 0.1 to 10% by weight.

4. Composition according to claim 3, wherein the nucleating agent is present in amounts ranging from 0.2 to 4% by weight.

5. Composition according to any of the preceding claims, wherein the nucleating agent has an alkali metal content or an alkaline-earth metal content ranging from 0.09 to 33% by weight.

6. Composition according to any of the preceding claims, wherein the alkali metal is sodium.

7. Composition according to claim 6, wherein the content of sodium in the nucleating agent is higher than 0.4% by weight.

8. Composition according to any of the preceding claims, additionally containing inert fillers such as glass,carbon or boron fibres and/or inorganic particles of glass, mica, zeolites, graphite or talc.

9. Nucleating agent as defined in claim 1, having an inherent viscosity in phenol/tetrachloroethane (60/40) at 30°C of more than 0.1 dl/g and a average number molecular weight higher than 1,000.

## Patentansprüche

1. Schnell kristallisierende Polyesterzusammensetzungen, die eine Mischung umfassen, bestehend aus einem thermoplastischen Polyesterharz und einem Keimbildungsmittel, ausgewählt aus (a) einem Alkali- oder Erdalkalimetallsalz auf Polymerbasis oder Mischungen dieser Salze der allgemeinen Formel:
M-(OOC-C₆H₄-COO-CH₂CH₂CH₂CH₂)ₘ(OOC-Z-COOY)ₙ(ABR) (1)
worin
M ein Alkali- oder ein Erdalkalimetall ist,
Y eine Gruppe, ausgewählt aus -CH₂CH₂-, -(CH₂)₄- und -CH₂CH₂OCH₂CH₂-, ist,
Z -C₆H₄- oder -(CH₂)_{q}- bedeutet, wobei q eine Zahl von 7 bis 10 ist,
A ausgewählt ist aus Carboxylat, Sulfonat, Sulfinat, Phosphonat und Phosphinat,
B eine direkte Bindung oder eine Gruppe, ausgewählt aus -CH=CH-, -CH₂- und -CH₂CH₂-, ist,
R ein Arylrest mit 1 bis 3 aromatischen Ringen, entweder direkt aneinander gebunden oder kondensiert oder verknüpft durch eine der folgenden difunktionellen Gruppen:
-O-, -CO-, -OCH₂CH₂O-, -SO₂, -NH-, -C(CH₃)₂-, ist
oder R ein heterocyclischer Ring ist, mit der Maßgabe, daß, wenn A ein Carboxylat und B eine direkte Bindung bedeuten, R mit mindestens einer Gruppe, ausgewählt aus Nitro, Halogen, Phenyl oder Oxyphenyl, substituiert ist, und, für R = Phenyl, R auch mit einer Gruppe, ausgewählt aus -COOM und -COO(CH₂)₄OH, substituiert sein kann,
m eine Zahl von 5 bis 20 ist,
n 0 oder eine Zahl von 1 bis 5, vorzugsweise 1 bis 3, ist und
(b) Reaktionsprodukten von Polybutylenterephthalat mit Natriumsalicylat.

2. Zusammensetzung nach Anspruch 1, worin das thermoplastische Polyesterharz Polyethylenterephthalat ist.

3. Zusammensetzung nach Anspruch 1 oder 2, worin das Keimbildungsmittel in Mengen von 0.1 bis 10 Gew.-% vorliegt.

4. Zusammensetzung nach Anspruch 3, worin das Keimbildungsmittel in Mengen von 0.2 bis 4 Gew.-% vorliegt.

5. Zusammensetzung nach irgendeinem der vorhergehenden Ansprüche, worin das Keimbildungsmittel einen Alkalimetallgehalt oder einen Erdalkalimetallgehalt von 0.09 bis 33 Gew.-% hat.

6. Zusammensetzung nach irgendeinem der vorhergehenden Ansprüche, worin das Alkalimetall Natrium ist.

7. Zusammensetzung nach Anspruch 6, worin der Gehalt an Natrium im Keimbildungsmittel größer als 0.4 Gew.-% ist.

8. Zusammensetzung nach irgendeinem der vorhergehenden Ansprüche, die zusätzlich inerte Füllstoffe, wie Glas-, Kohlenstoff- oder Borfasern, und/oder anorganische Partikel aus Glas, Glimmer, Zeolithen, Graphit oder Talkum enthält.

9. Keimbildungsmittel wie in Anspruch 1 definiert, das eine logarithmische Viskositätszahl in Phenol/Tetrachlorethan (60/40) bei 30 °C von über 0.1 dl/g und ein Zahlenmittel des Molekulargewichts von über 1000 besitzt.

## Revendications

1. Une composition de polyester cristallisant rapidement, comprenant un mélange consistant en une résine de polyester thermoplastique et un agent de nucléation sélectionné parmi:
(a) les sels de métaux alcalin ou alcalino-terreux à base de polymères, ou les mélanges desdits sels de formule générale:
M-(OOC-C₆H₄-COO-CH₂CH₂CH₂CH₂)ₘ-(OOC-Z-COOY)ₙ-(ABR) (1)
dans laquelle:
M représente un métal alcalin ou alcalino-terreux;
Y est un radical sélectionné parmi -CH₂CH₂-, -(CH₂)₄-et -CH₂CH₂OCH₂CH₂-;
Z représente un radical -C₆H₄-, ou un radical -(CH₂)_{q}-, q représentant un nombre entier allant de 7 à 10;
A est sélectionné parmi: carboxylate, sulfonate, sulfinate, phosphonate et phosphinate;
B est une liaison directe ou un radical sélectionné parmi -CH=CH-, -CH₂- et -CH₂CH₂-;
R représente soit un radical aryle contenant entre 1 et 3 cycles aromatiques, directement liés entre eux ou condensés ou liés par l'un des groupes bifonctionnels suivants: -O-, -CO-, -OCH₂CH₂O-, -SO₂-, -NH-, -C(CH₃)₂-, soit R représente un cycle hétérocyclique tel que thiophène ou furanne;
à condition que lorsque A représente un carboxylate et B une liaison directe, R est substitué par au moins un groupe sélectionné parmi nitro, un atome d'halogène, un radical phényle ou oxyphényle et quand R représente un radical phényle, R peut également être substitué par un radical sélectionné parmi -COOM et -COO(CH₂)₄OH;
m représente un nombre entier compris entre 5 et 20, de préférence entre 5 et 10;
n est égal à 0 ou représente un nombre entier compris entre 1 et 5, de préférence entre 1 et 3; et
(b) les produits de réaction du polytéréphtalate de butylène avec le salicylate de sodium.

2. Une composition selon la revendication 1, caractérisée en ce que la résine de polyester thermoplastique correspond à du polytéréphtalate d'éthylène.

3. Une composition selon la revendication 1 ou 2, caractérisée en ce que l'agent de nucléation est présent en une quantité de 0,1 à 10% en poids.

4. Une composition selon la revendication 3, caractérisée en ce que l'agent de nucléation représente entre 0,2 et 4% en poids.

5. Une composition selon l'une quelconque des revendications précédentes, caractérisée en ce que l'agent de nucléation présente une teneur en métal alcalin ou métal alcalino-terreux comprise entre 0,09 et 33% en poids.

6. Une composition selon l'une quelconque des revendications précédentes, caractérisée en ce que le métal alcalin est du sodium.

7. Une composition selon la revendication 6, caractérisée en ce que la teneur en sodium de l'agent de nucléation est supérieure à 0,4% en poids.

8. Une composition selon l'une quelconque des revendications précédentes, qui contient en plus des adjuvants inertes tels que fibres de bore, de carbone ou de verre et/ou des particules inorganiques de verre, de mica, de zéolites, de graphite ou de talc.

9. Un agent de nucléation tel que défini dans la revendication 1, présentant une viscosité inhérente dans le phénol/tétrachloroéthane (60/40) à 30°C supérieure à 0,1 dl/g et un poids moléculaire moyen en nombre supérieur à 1000.
